# EUROPÄISCHE PATENTSCHRIFT

(11) **EP 2 268 175 B1**
(45) Veröffentlichungstag und Bekanntmachung des Hinweises auf die Patenterteilung: **22.05.2013**
(21) Anmeldenummer: 09737786.5
(22) Anmeldetag: 31.03.2009
(51) Int. Cl.: A47J 31/44

(54) **GETRÄNKEZUBEREITUNGSVORRICHTUNG**
DRINKS-PREPARING DEVICE
DISPOSITIF DE PRÉPARATION DE BOISSON

(30) Priorität: 30.04.2008 DE 102008021777
(43) Veröffentlichungstag der Anmeldung: 05.01.2011
(73) Patentinhaber: Eugster/Frismag AG, 8580 Amriswil (CH)
(72) Erfinder: STUTZ, Dieter, 9565 Bussnang (CH); FISCHER, Daniel, 8590 Romanshorn (CH); HÜPPI, Marcel, W., 9404 Rorschacherberg (CH)
(74) Vertreter: Schubert, Siegmar
(86) Internationale Anmeldenummer: PCT/EP2009/002357
(87) Internationale Veröffentlichungsnummer: WO 2009/132742

(56) Entgegenhaltungen:
- GB-A- 2 163 727
- JP-A- 61 056 616
- US-A- 5 724 883

## Beschreibung

Die Erfindung betrifft eine Getränkezubereitungsvorrichtung zur Herstellung eines Getränks gemäß dem Oberbegriff des Anspruchs 1.

Die Getränkezubereitungsvorrichtung umfasst eine Heißgetränkevorrichtung, insbesondere zur Kaffee- oder Espressozubereitung, und eine mit ihr strömungsmäßig verbundene Kühlvorrichtung nach dem Oberbegriff des 1 und dient zur hierin umrissenen Herstellung eines Getränks.

Sowohl zur Herstellung von Heißgetränken, deren Temperatur über der Umgebungstemperatur liegt, insbesondere Kaffee/Espresso, als auch zur Herstellung von Kaltgetränken sind für sich Verfahren und Verrichtungen bekannt, die jedoch nicht geeignet sind, das Verbrauchserzeugnis, willkürlich auswählbar ein Heißgetränk oder aus diesem durch Abkühien ein Kaltgstränk, mit ein- und derselben Heißgetränkezubereitungsvorrichtung in Mengen bzw. Portionen, wie sie in der Gastronomie oder in Haushalten typisch sind, geschmecklich optimiert herzustellen.

Als Kaltgetränk ist hier insbesondere Eiskaffee ins Auge gefasst, aber auch gekühltes Wasser, sogenanntes Kaltwasser. Das gekühlte Wasser soll gegebenenfalls zur Getränkezubereitung aus einem Instantpulver verwendet werden.

Generell soll unter einem Kalt- oder Eisgetränk ein Getränk verstanden werden, welches eine Temperatur jedenfalls unter Umgebungstemperatur, bevorzugt unter 15°C, besonders bevorzugt zwischen 5°C und 8°C, aufweist.

Unter dem Begriff Heißgetränk soll in dem vorliegenden Text auch Heißwasser verstanden werden, wie es insbesondere zur Aufbereitung von Tee oder Nahrungs- und Genussmittelinstantpulver, auch von Nahrungsmittelzusammenstellungen zur Zubereitung von Suppen oder dergleichen verwendet wird.

Zu üblichen bekannten Heißgetränkezubereitungsvorrichtungen, die typisch einen Heißwassererzeuger beinhalten, gehören Kaffee-/Espressozubereitungsvorrichtungen bzw. -maschinen, die im Wesentlichen eine Brüheinheit, einen Wassererhitzer und eine Wasserpumpe zur Speisung des Wassererhitzers umfassen, wobei die Wasserpumpe an einen Wasserbehälter angeschlossen ist, der als Wasserquelle Frischwasser vorhält.

Unter dem Begriff Wasserquelle soll in dem vorliegenden Text außer einem solchen Wasserbehälter auch eine Wasserleitung verstanden werden, wie sie in einem Gebäude installiert ist.

Wenn Kaffee aus einer üblichen Kaffee-/Espressozubereitungsvorrichtung zu Eiskaffee weiter verarbeitet werden soll, ist in der Regel ein langwieriger, umständlich durchzuführender Kühlprozess des heißen Kaffees erforderlich, d.h. es kann nicht ohne weiteres sofort aus frisch gebrühtem Kaffee Eiskaffee hergestellt werden. Typisch wird das Heißgetränk, speziell Kaffee/Espresso vor und/oder während des Abkühlens in einem Gefäß gespeichert, um ein Kühlmittel, insbesondere Eis, Eiswasser oder Kühlkörper so lange auf das Heißgetränk einwirken zu lassen, dass dessen Temperatur zu Genusszwecken genügend herabgesetzt wird. Durch längere Verweilzeiten des Heißgetränks, gegebenenfalls vor dem Kühlvorgang und während des Kühlvorgangs, kann der Geschmack des entstehenden Kaltgetränks beeinträchtigt werden.

Um eine einfache rasche Kühlung eines Getränks anzustreben, dessen Ausgangstemperatur bis zu 30°C betragen soll, also kein typisches Heißgetränk darstellt, ist bereits ein Durchlaufkühlgerät bekannt, welches einen thermisch isolierten Behälter zur Aufnahme eines Kühlmittels wie Eis, Eiswasser, Leitungswasser, Kühlsohle, sowie eine in dem Kühlmittel angeordnete Kühlschlange aus wärmeleitfähigem Material umfasst, durch welche das zu kühlende Getränke mit mäßiger Geschwindigkeit durchfließen soll (DE 1 730 508 U). Dieses Durchlaufkühlgerät ist jedoch zum Kühlen von Heißgetränken wie frisch bereitetem Kaffee bzw. Espresso insbesondere in größeren Mengen wie für die Gastronomie wenig geeignet, unter anderem, weil das Kühlmittel, welches Wärme aus dem Getränk aufnehmen soll, erst in den thermisch isolierten Behälter eingegeben werden muss und dann im Gebrauch die aufgenommene Wärme aus dem thermisch isolierten Behälter kaum abgeben kann, so dass die Kühlwirkung nachlässt, insbesondere, wenn keine größeren Kuhlmittelmengen vorgesehen sind.

In einem bekannten Gerät zur Heiß-/Kaltgetränkezubereitung US 5 724 883 A mit einem Hebel zum Umleiten des zubereiteten Heißgetränks kann eine Umleitoberfläche über einer Luftkühlpfanne, die beide der umgebenden Atmosphäre frei ausgesetzt sind, unter einem Auslassstutzen für hergestelltes Heißgetränk verstellt werden. Die Umleitoberfläche und die Luftkühlpfanne weisen je eine Öffnung auf, durch die das Heißgetränk direkt von dem Auslassstutzen In ein Aufnahmegefäß laufen kann. In der anderen Stellung des Hebels befindet sich der Auslassstutzen nicht über der Öffnung, sondern über der verschobenen Umleitoberfläche, die das Heißgetränk durch die Öffnung fallend auf die Luftkühlpfanne leitet, auf der sich das Heißgetränk zu einer dünnen Schicht ausbreitet, um eine wirksame Luftkühlung durch Verdunsten bzw. Verdampfen zu bewirken, und erst dann in ein Auffanggefäß. Durch diese Umschalteinrichtung wird das abzukühlende Heißgetränk aromatisch verschlechtert.

In einem vorbekannten Getränkezubereitungsgerät nach GB 2 163 727 sind unter einer Abgabeöffnung einer ersten Getränkeabgabeleitung, die ein Heißgetränk, insbesondere gebrühten Kaffee, abgibt, zwei zweite Abgabeleitungen so angeordnet, dass sie unter der Abgabeöffnung der ersten Abgabeleitung wahlweise das Heißgetränk aufnehmen können, um dieses entweder direkt in ein Aufnahmegefäß oder indirekt über einen Tank mit gekühltem Wasser als Kühlmedium in ein anderes Aufnahmegefäß zu leiten. Die Eingänge der zweiten Abgabeleitungen sind zur wahlweise Getränkeaufnahme trichterförmig offen ausgebildet, und über diesen trichterförmigen Eingängen befindet sich eine mit einem Solenoid umschaltbare Umlenkklappe. Außer der aromatischen Beeinträchtigung des über diese Umschalteinrichtung abgegebenen Getränks ist die offene Bauweise der Umschalteinrichtung nicht kompakt. Sie kann ihren Einbauraum verschmutzen.

Der vorliegenden Erfindung liegt daher die Aufgabe zugrunde, unter Vermeidung der Nachteile bekannter Getränkezubereitungs- bzw. Herstellungsverfahren wahlweise Heißgetränke oder Kaltgetränke jeweils geschmacklich hochwertiger Qualität in Getränkemengen bzw. Portionen, wie sie für die Gastronomie oder für Haushalte typisch sind, rasch und effektiv mit der zum Genuss gewünschten Temperatur herzustellen. Das somit vielseitige Verfahren soll mit einem geringen apparativen Aufwand durchführbar sein.

Diese Aufgabe wird mit einer Getränkebereitungsvorrichtung mit den in Anspruch 1 angegebenen Merkmalen gelöst.

Mit diesem Getränkezubereitungsgerät wird ein Verfahren durchgeführt, nach dem in einem ersten Verfahrensschritt ein Heißgetränk mit einer bekannten Heißgetränkezubereitungsvorrichtung in einer insoweit üblichen Weise bereitet wird, wonach das hleißgetränk gewünschtenfalls als solches konsumierbar ist, oder aber es wird auf Wunsch ein Kaltgetränk hergestellt, indem das Heißgetränk in einem sich an den ersten Verfahrensschritt unmittelbar anschließenden zweiten Verfahrensschritt im Wesentlichen ohne direkte Zugabe von Kühlmitteln, insbesondere Eis, Eiswasser oder Kühlkörpern mittels einer Kühlvorrichtung auf Kaltgetränketemperatur kontinuierlich abgekühlt wird. Durch die unmittelbare Abfolge der beiden Verfahrensschritte und den fortlaufenden Kühlprozess wird ein geschmacklich hochwertiges Kaltgetränk gewährleistet. Die unmittelbare Abfolge wird dadurch realisiert, dass das Kaltgetränk, ohne Zwischenspeicherung des Heißgetränks in einem Gefäß, sofort mittels der Kühlvorrichtung, durch die das zu kühlende Heißgetränk strömt, kontinuierlich hergestellt wird. Die Kühlvorrichtung kann mit einem aktiven Kühlaggregat wie einem Kompressor oder Absorber oder bevorzugt einer Peltierelementeanordnung realisiert sein. Die Verfahrensschritte laufen raumsparend mit kurzen Fluidwegen in einem einzigen Getränkezubereitungsgerät, d.h. innerhalb eines Gehäuses ab, das sowohl die Heißgetränkezubereitungsvorrichtung als auch die Kühlvorrichtung beinhaltet.

Die erfindungsgemäße kompakte Getränkezubereitungsvorrichtung geht von einem Getränkezubereitungsgerät in nur einem Gehäuse aus, in dem notwendige Fluidverbindungen kurz sind. Über eine Heißgetränkeleitung dieser Getränkezubereitungsvorrichtung kann kontinuierlich ein Heißgetränk in die Kühlvorrichtung eingespeist werden.

Zur raschen wahlweisen Umschaltung der Getränkezubereitungsvorrichtung von Heißgetränkeabgabe auf Kaltgetränkeabgabe und umgekehrt ist eine Ventilanordnung, z.B. ein Mehrwegeventil, an einem Ausgang der Heißgetränkezubereitungsvorrichtung, insbesondere der Brüheinheit, vorgesehen, um diese über die Ventilanordnung direkt mit einem Heißgetränkeauslauf der Getränkezubereitungsvorrichtung zu verbinden, unter dem beispielsweise ein Espressoauffanggefäß oder deren mehrere untergestellt sind, oder alternativ mit dem Eingang der Kühlvorrichtung, insbesondere der ersten Strömungskanalanordnung des ersten Wärmetauschers zu verbinden. Im letzteren Fall kann das Heißgetränk, z.B. Kaffee, aus dem Ausgang der Heißgetränkezubereitungsvorrichtung in die erste Strömungskanalanordnung des ersten Wärmetauschers strömen und anschließend als Kaltgetränk über den Kaltgetränkeauslauf der Getränkezubereitungsvorrichtung z.B. in ein Eiskaffeeauffanggefäß.

Statt eines gesonderten Heißgetränkeauslaufs und Kaltgetränkeauslaufs kann zur wahlweisen Getränkeausgabe auch eine (Kalt-)Getränke-auslaufleitung dienen, die weiter oben definiert ist.

Die Ventilanordnung kann in erweiterter Ausführung nach Anspruch 2 auch zwischen der mit der Wasserquelle in Verbindung stehenden Mischwasserteitung und dem Eingang der Kühlvorrichtung bzw. der ersten Strömungskanalanordnung des ersten Wärmetauschers und/oder der Kalt-/Getränkeauslaufleitung angeordnet sein, um Mischwasser dem Heißgetränk vor oder nach Abkühlung in dem ersten Wärmetauscher zuzumischen.

Zur raschen wahlweisen Aktivierung dieser und weiterer Funktionen der Getränkezubereitungsvorrichtung ist gemäß Anspruch 3 die Ventilanordnung mit Eingängen für Heißwasser, Heißgetränk und Mischwasser sowie mit Ausgängen für zu kühlendes Getränk bzw. hieraus entstehendes Kaltgetränk, Mischwasser und Heißgetränk ausgestattet. Verbindungen zwischen diesen Eingängen und Ausgängen können durch eine entsprechend gewünschten Getränkearten bzw. Zubereitungsarten vorprogrammierbare Steuerungseinhelt leicht bedienbar eingestellt werden. Die Steuerungseinheit wird zwecksmäßig außerdem zur Aktivierung bzw. Deaktivierung bestimmter Funktionseinheiten der Getränkezubereitungsvorrichtung, insbesondere deren Heißgetränkezubereitungsvorrichtung, wie einer Kaffee-/Espressozubereitungsvorrichtung, und gegebenenfalls einzelner Komponenten wie Pumpen, Wassererhitzer eingesetzt. Durch weitgehende Aktivierung bzw. Deaktivierung der Funktionseinheiten und Komponenten kann die Ventilanordnung vereinfacht werden bzw. weitgehend ersetzt werden.

Beispielsweise um alternativ Kaltwasser zu bereiten und aus dem Getränkeauslauf, insbesondere der Kaltgetränkeauslaufleitung, des Getränkezubereitungsgeräts abzugeben, kann die Steuerungseinheit so ausgebildet sein, dass bei abgeschalteter Heißgetränkezubereitungsvorrichtung die Kühlvorrichtung, insbesondere das Kälteaggregat des ersten Wärmetauschers von der Mischwasserleitung gespeist wird, wozu gegebenenfalls die Mischwasserpumpe eingeschaltet ist.

Die Steuerungseinheit kann weiterhin zweckmäßig gemäß Anspruch 21 so ausgebildet sein, dass durch sie das Kälteaggregat des ersten Wärmetauschers in einen Stand-by-Modus geschaltet werden kann, in dem das Kältemittel des Kälteaggregats in einer Kältemittelkreislaufleitung vorgekühlt wird. Damit wird eine Wartezeit reduziert oder vermieden, um die vorgesehene Temperatur zum Kühlen der ersten Strömungskanalanordnung in dem ersten Wärmetauscher zu erreichen.

Die in der Getränkezubereitungsvorrichtung nach Anspruch 1 verwendete Kühlvorrichtung umfasst mindestens einen ersten Wärmetauscher, der wenigstens eine erste Strömungskanalanordnung für kontinuierlichen Durchlauf eines zu kühlenden Getränks bzw. Heißgetränks, insbesondere Espresso, aufweist, die ausgangsseitig mit dem Kalt-/Getränkeauslauf des Getränkezubereitungsgeräts verbunden ist, sowie ein mit dem Wärmetauscher in wärmeleitender Verbindung stehendes Kälteaggregat.

Zu dem ersten Wärmetauscher kann gemäß Anspruch 14 eine zweite Strömungskanalanordnung gehören, die in gut wärmeleitender Verbindung mit der ersten Strömungskanalanordnung steht und in einem Kältemittelkreislauf mit einem Kälteaggregat, nach Anspruch 4 einem Kompressionskälteaggregat oder nach Anspruch 5 einem Absorptionskälteaggregat, angeordnet ist. Dabei kann besonders vorteilhaft ein Verdampfer des Kälteaggregats gemäß Anspruch 15 direkt durch die zweite Strömungskanalanordnung des ersten Wärmetauschers gebildet sein, wodurch ein guter Wirkungsgrad erreicht wird.

Statt eines In einem Kältemittelkreislauf angeordneten Kompressionskälteaggregats oder Absorptionskälteaggregats kann eine Peltierelementeanordnung als Kälteaggregat vorgesehen sein. Die Peltierelementeanordnung, minimal ein Peltierelement, mit an sich bekannten Vorzügen, steht gemäß Anspruch 5 einfach mit einer Strömungskanalanordnung des ersten Wärmetauschers zur Durchleitung des zu kühlenden Getränks bzw. der Getränke-/Kaltwassermischung bzw. Kaltwasser In wärmeleitender Verbindung, und zwar an seiner Peltierkaltseite.

Zur Kühlung der Peltierwarmseite der Peltierelementeanordnung und zur besseren Energienutzung kann nach Anspruch 6 die Peltierwarmseite der Peltierlementeanordnung mit einer Strömungskanalanordnung eines zweiten Wärmetauschers, d.h. einer Wärmetauschereinheit, in gut wärmeleitender Verbindung stehen, durch deren Strömungskanalanordnung das Wasser in die Heißgetränkezubereitungsvorrichtung bzw. in den Durchlauferhitzer geführt ist. Somit stellt ein Block mit der Peltierelementeanordnung in diesem Fall einen doppelten Wärmetauscher dar, und zwar auf der Peltierkaltseite zur Kühlung des Kaltgetränkes und auf der Peltierwarmseite zur Vorwärmung des Brühwassers in der Durchlauferhitzerspelseleitung.

Die zur wahlweisen alternativen Herstellung eines Heißgetränks oder Kaltgetränks gesignete Getränkezubereitungsvorrichtung kann in dem Fall, in dem Heißgetränk als Endprodukt bzw. Verbrauchserzeugnis gewünscht wird, gemäß Anspruch 7 einfach so ausgebildet werden, dass das in dem Heißgetränkezubereitungsgerät bereitete Heißgetränk durch Deaktivierung oder strömungsmäßige Umgehung der Kühlvorrichtung von dem Getränkezubereitungsgerät abgegeben wird.

Als zusätzliche, vorteilhafte Maßnahme zum Erreichen der gewünschten Endtemperatur des Kaltgetränks kann gemäß Anspruch 8 strömungsmäßig nach der Kühlvorrichtung dem gekühlten Heißgetränk gekühltes Wasser aus der Wasserquelle beigemischt werden. Hierdurch genügt eine geringe Kühlleistung der Kühlvorrichtung, die deswegen besonders kompakt mit engen Kanälen ausgebildet sein kann.

Ebenfalls zum Herabsetzen der Kühlleistung der Kahlverrichtung dient die Maßnahme nach Anspruch 9, wonach strömungsmäßig vor der Kühlvorrichtung dem Heißgetränk Wasser aus der Wasserquelle beigemischt wird. Mit dem belgemischten Wasser, welches Frischwasser ist, wird weiter vorteilhaft die Kühlvorrichtung gereinigt. Das wie oben beizumischende Wasser wird auch als Mischwasser bezeichnet.

Ansonsten ist zur alternativen Herstellung eines Heißgetränks als Verbrauchserzeugnis, die Kühlvorrichtung gemäß Aspruch 7 deaktivierbar oder strömungsmäßig umgehbar ausgebildet.

Zur alternativen Bereitstellung von gekühltem Kaltwasser als Verbrauchserzeugnis oder als Vorstufe eines weiter zuzubereiteten Kaltgetränks ist die Heißgetränkezubereitungsvorrichtung gemäß Anspruch 10 strömungsmäßig umgehbar oder zumindest teilweise deaktivierbar.

Im Einzelnen ist die Heißgetränkezubereitungsvorrichtung bevorzugt gemäß Anspruch 11 mittels der Mischwasserleitung, die mit der Wasserquelle in Verbindung steht, strömungsmäßig umgehbar. Dieser Strömungsweg ist zweckmäßig mit einer in der Mischwasserleitung angeordneten Mischwasserpumpe nach Anspruch 12 aktivierbar.

Gemäß Anspruch 8 ist eine Mischwasserleitung mit einem Ausgang der Kühlvorrichtung strömungsmäßig verbindbar, um dem gekühlten Heißgetränk Mischwasser, insbesondere gekühltes Mischwasser, beizumischen.

Hierzu kann diese Mischwasserleitung insbesondere über eine Ventilanordnung zu einer dritten Strömungskanalanordnung des ersten Wärmetauschers führen, die mit dem Ausgang der Kühlvorrichtung, Insbesondere einer Kalt-/Getränkeauslaufleitung verbunden ist.

(Soweit eine Kaltgetränkeauslaufleitung so angeordnet ist, dass sie alternativ auch Heißgetränk abgeben kann, wird sie in diesem Text als Kalt-/Getränkeauslaufleitung bezeichnet.)

Um strömungsmäßig vor der Kühlvorrichtung dem Heißgetränk Wasser aus einer Wasserquelle beizumischen, ist die Ausgestaltung der Getränkezubereitungsvorrichtung gemäß Anspruch 9 vorgesehen, wonach die Mischwasserleitung, die mit der Wasserquelle in Verbindung steht, mit einem Eingang der Kühlvorrichtung, insbesondere einer Wärmetauschereingangsleitung verbunden werden kann.

Um in nur einem Durchlauf durch den Wärmetauscher eine Abkühlung des Heißgetränks auf die gewünschte Temperatur von insbesondere unter 10°C zu erreichen, kann gemäß Anspruch 8 stromabwärts des ersten Wärmetauschers oder gemäß Anspruch 9 stromaufwärts des ersten Wärmetauschers dem zu kühlenden Getränk Wasser bzw. Mischwasser aus der Mischwasserleitung zugemischt werden, die mit der Wasserquelle, insbesondere einem Wasserbehälter, in Verbindung steht. Im erstgenannten Fall der Zumischung des gekühlten Mischwassers am Ausgang des ersten Wärmetauschers kann die Zumischung über die Mischwasserleitung, die von der Wasserquelle gespeist wird, und die strömungsmäßig nachfolgende dritte Strömungskanalanordnung des ersten Wärmetauschers erfolgen.

In beiden obigen Zufuhrvarianten des Mischwassers zu dem zu kühlenden Getränk wird die durch die Kühleinheit abzuführende Wärmemenge kleiner. Durch das Zugeben von Mischwasser in das Heißgetränk ergibt sich eine Mischtemperatur. Deshalb muss die Kühleinheit das Getränk nur noch um die Temperaturdifferenz zwischen der Mischtemperatur und der Endtemperatur des Kaltgetränkes abkühlen. In dieser Weise lässt sich sogenannter Eiskaffee, der eine Temperatur von unter 10°C haben soll, auch in größeren Mengen erzeugen. Die Änderung der Zusammensetzung des Kaltgetränks gegenüber dem Heißgetränk durch das Zumischen des Mischwassers ist relativ gering und kann geschmacklich weitgehend kompensiert werden, indem das Heißgetränk z.B. als Espressokonzentrat hergestellt wird, so dass nach dem Zumischen des Mischwassers das Kaltgetränk die Stärke eines durchschnittlichen Eiskaffees annehmen kann.

Zur Kaffee-/Espressozubereitung als Heißgetränk kann nach Anspruch 13 eine Kaffee-/Espressozubereitungsvorrichtung dienen, die eine Brüheinheit, einen Wassererhitzer, insbesondere Durchlauferhitzer, und eine Wasserpumpe umfasst, die an eine Wasserquelle, insbesondere an einen Wasserbehälter für Frischwasser angeschlossen sein, der typisch für die Kaffee-/Espressozubereitung vorgesehen ist.

Mit dem Wasserbehälter kann aber hier auch zweckmäßig die oben erwähnte Mischwasserleitung zur Abgabe von Kaltwasser für ein Kaltgetränk oder von Mischwasser zum Mischen mit einem zu kühlenden Heißgetränks in Verbindung stehen.

Der Wassererhitzer einer solchen Kaffee-/Espressozubereitungsvorrichtung kann auch zur Heißwassererzeugung als Vorstufe eines anderen Heißgetränks genutzt werden.

Zu dem ersten Wärmetauscher kann gemäß Anspruch 15 eine dritte Strömungskanalanordnung gehören, die in gut wärmeleitender Verbindung mit der ersten Strömungskanalanordnung bzw. gegebenenfalls der zweiten Strömungskanalanordnung steht. Damit wird das Mischwasser gekühlt, bevor es dem gekühlten Heißgetränk zugemischt wird oder alternativ als Kaltwasser ausgegeben wird.

Ein weiterhin zu dem Kompressionsaggregat oder Absorptionskälteaggregat gehörender Kondensator kann gemäß Anspruch 17 von einer konvektionsgekühlten Bauart sein oder aber zwangsgekühlt sein.

Besonders zweckmäßig ist der Kondensator in einem zweiten Wärmetauscher nach Anspruch 18 integriert, der außer der Strömungskanalanordnung des Kondensators eine weitere Strömungskanalanordnung umfasst, die in einer Durchlauferhitzerspeiseleitung zu dem Durchlauferhitzer der Kaffee-/Espressozubereitungsvorrichtung bzw. der Heißgetränkeerzeugungsvorrichtung angeordnet ist. Damit wird in die Kondensationswärme zur Vorwärmung des Wassers für die Heißgetränkebereitung, nämlich Espresso- oder Kaffeebereitung, genutzt.

Wenn das in der Heißgetränkezubereitungsvorrichtung bereitete Heißgetränk zu einem Kaltgetränk abgekühlt werden soll, kann dem Heißgetränk Wärme auch direkt, d.h. ohne Kälteaggregat bzw. Peltierelementeanordnung, entzogen werden und heizenergiesparend zum Vorwärmen des Frischwassers genutzt werden, welches in die Heißgetränkezubereitungsvorrichtung für folgende Heißgetränkezubereitung eingespeist wird. Hierzu wird die dem Heißgetränk entzogene Wärme in dieses Wasser bzw. Frischwasser mit einem weiteren Wärmetauscher rückgeführt. In dem Fall einer Kaffee-/Espressozubereitungsvorrichtung als Heißgetränkezubereitungsvorrichtung ist nach Anspruch 19 dieser Wärmetauscher mit einer ersten Strömungskanalanordnung in der Durchlauferhitzerspeiseleitung zu dem Durchlauferhitzer angeordnet und mit einer zweiten Strömungskanalanordnung in der Heißgetränkeleitung am Ausgang der Kaffee-/Espressozubereitungsvorrichtung angeordnet Bei diesem weiteren Wärmetauscher handelt es sich um den dritten Wärmetauscher, wenn in der Durchlauferhitzerspeiseleitung auch eine Strömungskanalanordnung des weiter oben genannten zweiten Wärmetauschers angeordnet ist, der Abwärme von der Kühlvorrichtung bzw. dem ersten Wärmetauscher bezieht. In letzterem Fall ist die erste Strömungskanalanordnung des dritten Wärmetauschers stromabwärts der Strömungskanalanordnung des zweiten Wärmetauschers in der Durchlauferhitzerspeiseleitung angeordnet, damit in beiden Wärmetauschern ein Temperaturgefälle zu der Durchlauferhitzerspeiseleltung gewährleistet ist. Für den Fall, dass das Heißgetränk, insbesondere Kaffee oder Espresso, nicht abgekühlt werden soll, wird diese zweite Strö mungskanalanordnung mit einem Ventil gesperrt bzw. überbrückt. Auch dieses Ventil kann Bestandteil der weiter oben genannten Ventilanordnung sein. Mit dem dritten Wärmetauscher werden der erste und der zweite Wärmetauscher sowie das Kälteaggregat bzw. die Peltierelementeanordnung entlastet und können schwacher dimensioniert sein.

Gemäß Anspruch 20 sind die Strömungskanalanordnungen der vorerwähnten Wärmetauscher besonders bevorzugt in Mikrostrukturtechnik ausgeführt. Damit lässt sich der Wärmetauscher kompakt ausbilden, indem in der Variante mit zwei oder drei Strömungskanalanordnungen alle druck- und flüsslgkeitsdicht, in geometrisch und thermisch engem Kontakt zueinander angeordnet sind. Die Strömungskanalanordnungen können beliebig, bevorzugt rechtwinklig oder parallel zueinander angeordnet sein.

Zur Erhöhung der Zuverlässigkeit der Kühlvorrichtung der Getränkezubereitungsvorrichtung, insbesondere wenn diese mindestens einen ersten Wärmetauscher mit einer Strömungskanalanordnung für das zu kühlende Heißgetränk aufweist, ist, um ein Verstopfen, z.B. mit Kaffeemahlgutresten, zu verhindem, zwischen dem Auslauf der Neißgetränkezubereitungsvorrichtung und der Kühlvorrichtung, insbesondere der genannten Strömungskanalanordnung des ersten Wärmetauschers, ein Partikelfilter angeordnet. Der Partikelfilter kann vorzugsweise gespült werden, und zwar mittels einer Querstromspülleitung bei jeder Heißgetränkebereitung, insbesondere Espressozubereitung, oder mittels eines speziellen Spülprogramms.

Eine flexibel einsetzbare, baukastenartige Zusammenstellung der Getränkezubereitungsvorrichtung ist in Anspruch 22 angegeben. Diese Zusammenstellung erleichtert die Aufstellung der kompletten Getränkezubereitungsvorrichtung, deren Grundkomponente, die Heißgetränkezubereitungsvorrichtung gegebenenfalls auch ohne Beistellgerät funktionieren, d.h. ein Heißgetränk abgeben kann, und für eine zukünftig gewünschte wahlweise Kaltgetränkeherstellung mit dem Beistellgerät ergänzt werden kann, das über die Heißgetränkeleitung fluidtechnisch und optimal auch steuerungstechnisch mit der Grundkomponente verbunden wird.

Die Erfindung wird nachfolgend anhand einer Zeichnung mit 7 Figuren näher beschrieben, woraus sich weitere Einzelheiten deren Merkmale ergeben können. Es zeigen:
- Figur 1: eine erste Ausführungsform der schematisch dargestellten Getränkezubereitungsvorrichtung,
- Figur 2: eine zweite Ausführungsform der schematisch dargestellten Getränkezubereitungsvorrichtung,
- Figur 3: eine dritte Ausführungsform der schematisch dargestellten Getränkezubereitungsvorrichtung,
- Figur 4: einen Ausschnitt aus einer vierten Ausführungsform, schematisch dargestellt,
- Figur 5: einen Ausschnitt einer fünften Ausführungsform, schematisch dargestellt,
- Figur 6: eine sechste Ausführungsform der Getränkezubereitungsvorrichtung, mit der die erste Ausführungsform weiterentwickelt ist, und
- Figur 7: eine siebte Ausführungsform der Getränkezubereitungsvorrichtung, mit der die zweite Ausführungsform weiterentwickelt ist.

In der Zeichnung sind übereinstimmende Bestandteile in den Ausführungsformen mit gleichen Bezugszeichen versehen.

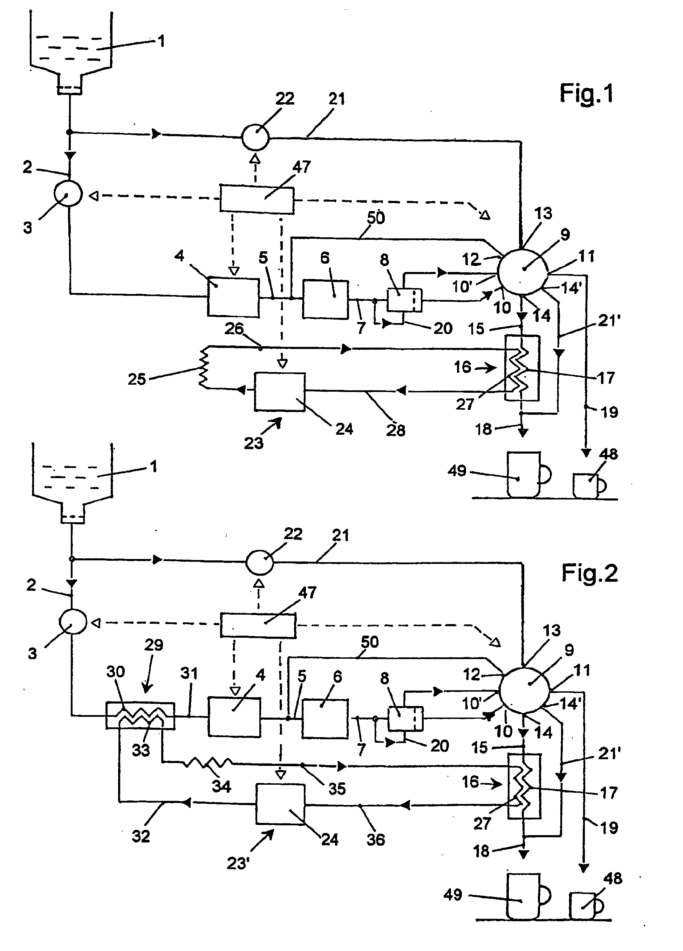

In allen Ausführungsformen und wie zu der ersten, zweiten, dritten, sechsten und siebten Ausführungsform der Getränkezubereitungsvorrichtung in den Figuren 1 bis 3, 6 und 7 dargestellt, ist ein Wasserbehälter 1 vorgesehen, in dem Wasser bevorratet wird, welches nachfolgend auch als Frischwasser bezeichnet wird. Der mit einem Partikelfilter versehene Wasserbehälter 1 ist an seinem Ausgang über eine Wasserleitung 2 und eine in ihr angeordnete Wasserpumpe 3 in der ersten Ausführungsform gemäß Figur 1 direkt mit einem Durchlauferhitzer 4 als Wassererhitzer verbunden, der eine Brüheinheit zur Erzeugung eines Espressosuds mit Brühwasser versorgen kann.

Sämtliche Ausführungsformen der Getränkezubereitungsvorrichtung umfassen weiterhin einen ersten Wärmetauscher 16 bzw. 37 zur Bereitung eines Kaltgetränks oder Eiskaffees aus dem in der Brüheinheit 6 gebrühten Espresso oder von Kaltwasser ohne Beimengung von Espresso. Hierzu steht der erste Wärmetauscher 16 in der ersten Ausführungsform der Getränkezubereitungsvorrichtung mit einem allgemein mit 23 bezeichneten Kälteaggregat so in Verbindung, dass der Wärmetauscher 16 gekühlt wird. Das Kälteaggregat 23 kann in der ersten Ausführungsform der Getränkezubereitungsvorrichtung, und in der zweiten Ausführungsform, in der das Kälteaggregat mit 23' bezeichnet ist, ein Kompressionskälteaggregat oder ein Absorptionskälteaggregat sein, von dem ein wesentlicher Bestandteil, nämlich ein mechanischer oder thermischer Kompressor, mit 24 bezeichnet ist. Zu dem Kälteaggregat 23 bzw. 23' gehört ein Verdampfer, der in dem ersten Wärmetauscher 16 der ersten und zweiten Ausführungsform der Getränkezubereitungsvorrichtung durch eine zweite Strömungskanalanordnung 27 des ersten Wärmetauschers 16 gebildet wird.

In der ersten Ausführungsform der Getränkezubereitungsvorrichtung nach Figur 1 gehören zu dem Kälteaggregat 23 weiterhin ein konvektionsgekühlter Kondensator 25 sowie Kältemittelkreislaufleitungsabschnitte 26, 28, die mit dem Kompressor/Austreiber 24 und dem Verdampfer 27 einen Kühlkreislauf bilden, in dem ein Kältemittel zirkuliert.

Die in Figur 2 gezeigte Ausführungsform der Getränkezubereitungsvorrichtung unterscheidet sich von der ersten Ausführungsform gemäß Figur 1 in der Kühlung des Kondensators 33 des Kälteaggregates 23', dessen Kondensator 33 Teil eines zweiten Wärmetauschers 29 ist, der eine Strömungskanalanordnung 30 aufweist, durch die von der Wasserleitung 2 zugeführtes Wasser fließt und dabei mittels der Abwärme des Kondensators 33 das dem Durchlauferhitzer 4 über eine Durchlauferhitzerspeiseleitung 36 zugeführte Brühwasser vorwärmt. Mit dem zweiten Wärmetauscher 29 erfolgen somit sowohl eine Kühlung des Kondensators 33 als auch eine Vorheizung des Brühwassers für den Durchlauferhitzer 4 in der Durchlauferhitzerspeiseleitung 31. In dem Kühlkreislauf, in dem ein Kältemittel umläuft, sind hier der Kompressor/Austreiber 24 des Kälteaggregats 23', der Kondensator 33 in dem zweiten Wärmetauscher 29, ein externer Kondensator 34, der Verdampfer 27 sowie verbindende Kühlmittelkreislaufabschnitte 32, 35, 36 angeordnet. Der externe Kondensator 34 ist erforderlich, weil in dem Kondensator 33 in dem zweiten Wärmetauscher 29 nur ein Teil des Kältemittels kondensiert wird. Der externe Kondensator 34 gewährleistet somit eine vollständigere Abgabe der Wärmemenge des Kältemittels.

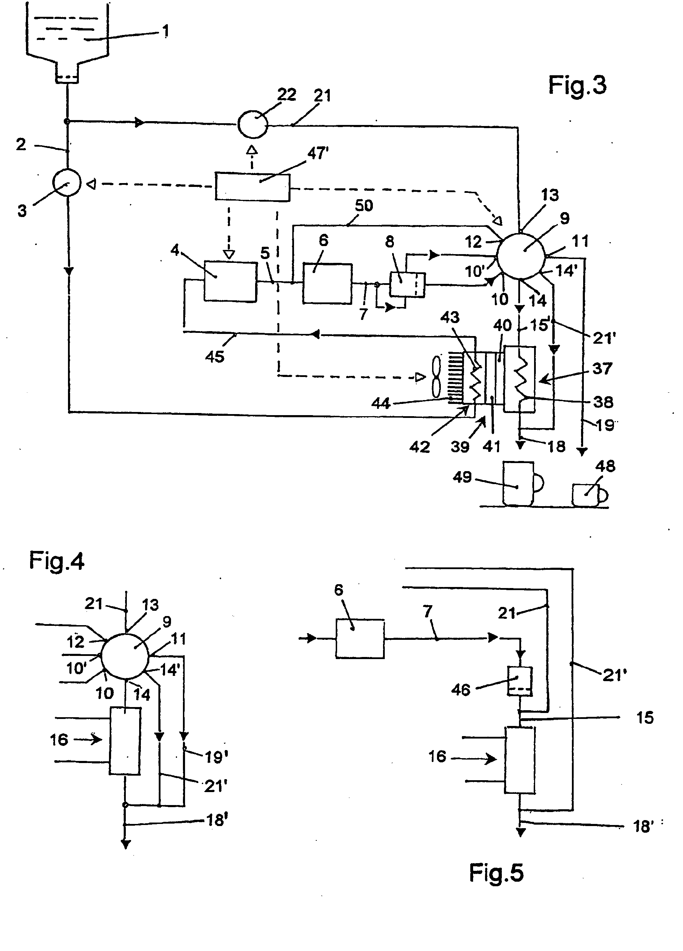

In einer dritten Ausführungsform der Getränkezubereitungsvorrichtung, wie in Figur 3 dargestellt, erfolgt die Kühlung eines ersten Wärmetauschers 37 mittels einer Peltierelementeanordnung 39. Die Zubereitung des Espresso und die Zuführung des Mischwassers erfolgen wie bei der Verwendung eines Kompressions- oder Absorptions-Kälteaggregates. Diese Ausführungsform unterscheidet sich von der ersten und zweiten Ausführungsform somit durch die aus einem oder mehreren Peltierelementen bestehende Peltierelementeanordnung 39, deren Peltierkaltseite 40 in gut wärmeleitendem Kontakt mit dem ersten Wärmetauscher 37 steht, der durch die Peltierelementeanordnung 39 gekühlt wird. Der erste Wärmetauscher 37 ist in dieser Ausführungsform mit nur einer Strömungskanalanordnung 38 versehen, durch die das zu kühlende Getränk fließt. Die Peltierwarmseite 41 der Peltierelementeanordnung 39 kann mittels Konvektion oder, wie in Figur 3 gezeigt, mittels eines an sie angeflanschten zweiten Wärmetauschers 42 gekühlt werden, der mit einer Strömungskanalanordnung 43 versehen ist, durch die von der Wasserleitung 2 zugeführtes Wasser fließt und dabei mit der Abwärme der Peltierelementeanordnung 39 das durchfließende Wasser vorwärmt und über eine Durchlauferhitzerspeiseleitung 45 dem Wassererhitzer 4 zuführt. Somit ist die Peltierelementeanordnung 39 in dem letztgenannten Fall, wie bereits geschildert, Bestandteil einer doppelten Wärmetauscheranordnung 37, 42, und zwar auf der Kaltseite zur Kühlung des Heißgetränks bzw. Espresso und auf der Warmseite zur Wärmeabfuhr und zur Vorwärmung des Brühwassers.

Eine Steuerungseinheit 47' für den wahlweisen Betrieb der dritten Ausführungsform der Getränkezubereitungsvorrichtung gemäß Figur 3 für die unterschiedlichen Getränkearten unterscheidet sich von einer Steuerungseinheit 47 der ersten und zweiten Ausführungsform der Getränkezubereitungsvorrichtung dadurch, dass die Steuerungseinheit 47' anstelle des Kompressor- oder Absorberkälteaggregates die Peltierelementeanordnung zu- oder abschaltet.

Die erste bis vierte sowie sechste und siebte Ausführungsformen der Getränkezubereitungsvorrichtung umfassen weiterhin eine Ventilanordnung 9, deren Eingang 10 für Heißgetränk über eine Heißgetränkeleitung 7 bzw. 7' und einen Partikelfilter 8 von der Brüheinheit 6 mit Heißgetränk bzw. Espressosud gespeist werden kann. An einen weiteren Eingang 10' ist gegebenenfalls eine nicht bezeichnete Bypassleitung des optional vorgesehenen Partikelfilters 8 ausgangsseitig angeschlossen.

Die Vielseitigkeit der Getränkezubereitungsvorrichtung wesentlich fördernd ist ein weiterer Eingang 12 der Ventilanordnung zum Anschluss einer Heißwasserleitung 50 vorgesehen, die von der Heißwasserleitung 5 am Ausgang des Durchlauferhitzers 4 abgezweigt ist.

Ein weiterer Eingang 13 der Ventilanordnung 9 steht über eine Mischwasserleitung 21 und eine in ihr angeordnete Mischwasserpumpe 22 mit dem Wasserbehälter 1 in Verbindung.

Weiterhin weist die Ventilanordnung 9 verschiedene Ausgänge auf, die je nach Vontileinstellung wahlweise verschiedene Fluide, insbesondere Getränke abgeben:

Von einem Ausgang 11 ist eine Heißgetränkeauslaufleitung 19 abgeleitet, aus der insbesondere Espressosud bzw. Espresso oder aber nur Heißwasser in ein Auffanggefäß 48 ausströmen kann.

Von einem weiteren Ausgang 14' der Ventilanordnung 9 ist eine Mischwasserleitung zu einer dritten Strömungskanalanordnung 17' des ersten Wärmetauschers 16 abgeleitet, die an den Ausgang der ersten Strömungskanalanordnung 17 des ersten Wärmetauschers 16 angeschlossen sein kann, oder die Mischwasserleitung von dem Ausgang 14' der Ventilanordnung 9 führt in der dritten Ausführungsform zu einer weiteren Strömungskanalanordnung des ersten Wärmetauschers 37, die an den Ausgang der Strömungskanaianordnung 38 des ersten Wärmetauschers 37 angeschlossen sein kann.

Ein weiterer Ausgang 14 der Ventilanordnung 9, der grundsätzlich vorhanden ist, steht mit einem Eingang der ersten Strömungskanalanordnung 17 an der Wärmetauschereingangsleitung 15 in Verbindung bzw. in der dritten Ausführungsform mit einem Eingang der Strömungskanalanordnung 38 an der Wärmetauschereingangsleitung 15' in Verbindung.

Die Ventilanordnung 9 kann von einer programmierbaren elektrischen Steuereinheit 47 bzw. 47' gesteuert werden, die auch die elektrisch angetriebene Wasserpumpe 3, die elektrisch angetriebene Misohwasser-pumpe 22. den Durchlauferhitzer 4 und das Kälteaggregat 23 bzw. 23' oder die Peltierelementeanordnung 39 je nach Getränkeart über elektrische Verbindungen zu- oder abschaltet.

Die oben beschriebenen Ausführungsformen der Getränkezubereitungsvorrichtung funktionieren folgendermaßen:

Zur Zubereitung eines Espresso als Verbrauchserzeugnis in der ersten Ausführungsform schaltet die Steuerungseinheit 47 die Wasserpumpe 3 zur Wasserförderung aus dem Wasserbehälter 1 ein, und die Wasserpumpe 3 fördert das Wasser über die Wasserleitung 2 und zu dem Durchlauferhitzer 4. In diesem wird das Wasser auf Brühtemperatur erhitzt und anschließend über eine Heißwasserleitung 5 in die Brüheinheit 6 zum Aufbrühen von Espressosud gefördert. Nach dem Brühvorgang wird der Espressosud über die Heißgetränkeleitung 7 und den Partikelfilter 8 in den Eingang 10 für Heißgetränk der Ventilanordnung 9 geleitet. Entsprechend der gesteuerten Einstellung der Ventilanordnung gelangt der Espressosud zu dem Ausgang 11 der Ventilanordnung 9 und von dort über die Heißgetränkeauslaufleitung 19 in das Heißgetränkeauffanggefäß 48. Außerdem kann ein Teilstrom des Espressosuds über die von der Heißgetränkeleitung 7 abgezweigte Bypassleitung 20 und den Partikelfilter 8 aus einem nicht bezeichneten Partikelfilter-Spülleitungsausgang in den Eingang 10' der Ventilanordnung 9 und durch diese ebenfalls zu dem Ausgang 11 der Ventilanordnung 9, aus der er ebenfalls über die Heißgetränkeauslaufleitung 19 in das Heißgetränkeauffanggefäß 48 abfließt. Während des Durchlaufes durch den Partikelfilter 8 spült somit dieser Teilstrom des Espressosuds automatisch den Partikelfilter.

Die Zubereitung eines Espresso in der zweiten Ausführungsform der Getränkezubereitungsvorrichtung unterscheidet sich von der ersten Ausführungsform dadurch, dass das Wasser, bevor es über die Durchlauferhitzerspeiseleitung 31 in den Durchlauferhitzer 4 eintritt, durch den zweiten Wärmetauscher 29 fließt, der die Abwärme des Kälteaggregates 23' an das Wasser abgibt und dieses vorwärmt.

Wenn nur Heißwasser von der Getränkezubereitungsvorrichtung abgegeben werden soll, um beispielsweise in dem Heißgetränkeauffanggefäß 48 Tee oder Suppe zuzubereiten, wird in dem Wassererhitzer 4 erzeugtes Heißwasser über die Heißwasserleitung 5 direkt über die von ihr abgezweigte Heißwasserleitung 50, also nicht über die Brüheinheit 6, dem Eingang 1 2 der für Heißwasserabgabe gesteuert eingestellten Ventileinheit 9 zu dessen Ausgang 11 für Heißgetränk geleitet und strömt aus diesem über die Heißgetränkeauslaufleitung 19 in das Heißgetränkeauffanggefäß 48. Diese Funktion kann in allen Ausführungsformen außer der fünften Ausführungsform mit der Ventilanordnung 9 eingestellt werden bzw. durchgeführt werden.

Zur Zubereitung eines Eiskaffees unter Verwendung eines Kompressions- oder Absorptions-Kälteaggregates 23 bzw. 23' schaltet die Steuerungseinheit 47 zuerst das Kälteaggregat 23 bzw. 23' und den Durchlauferhitzer 4 ein, und erst wenn das Kälteaggregat 23 bzw. 23', d.h. der Verdampfer 27 des Kälteaggregats 23 bzw. 23', welcher die zweite Strömungskanalanordnung 27 des ersten Wärmetauschers 16 bildet, und der Durchlauferhitzer 4 ihre Arbeitstemperaturen erreicht haben, schaltet die Steuerungseinheit 47 die Wasserpumpe 3 zur Wasserförderung aus dem Wasserbehälter 1 für die Espressozubereitung ein. Die Wasserpumpe 3 fördert das Wasser über die Wasserleitung 2, wie in Figur 1 gezeigt, bei der ersten Ausführungsform der Getränkezubereitungsvorrichtung direkt in den Durchlauferhitzer 4 und bei der zweiten Ausführungsform, wie in Figur 2 dargestellt, über einen zweiten Wärmetauscher 29, der die Abwärme des Kälteaggregates 23' an das Wasser abgibt und dieses dabei vorwärmt, in den Durchlauferhitzer 4. In diesem wird das Wasser auf Brühtemperatur erhitzt und anschließend über die Heißwasserleitung 5 in die Brüheinheit 6 gefördert. Der in dem Brühvorgang entstandene Espressosud wird wiederum über die Heißgetränkeleitung 7 und den Partikelfilter 7 in den Eingang 10 der Ventilanordnung 9 geleitet.

Gleichzeitig mit Start des Espressozubereitungsvorgangs schaltet die Steuerungseinheit 47 die Mischwasserpumpe 22 für die Förderung von Wasser aus dem Wasserbehälter 1 ein, welches hier als Mischwasser über die Misch-wasserleitung 21 dem Eingang 13 der Ventilanordnung 9 zugeführt wird. In der durch die Steuereinheit 47 gesteuerten Getränkeartstellung "Eiskaffee" der Ventilanordnung 9 verbindet diese den Eingang 13 wie den Eingang 10 mit dem Ausgang 14 der Ventilanordnung 9. Damit werden der heiße Espressosud und das Mischwasser gleichzeitig an den zweiten Ausgang 14 angeschlossenen Wärmetauschereingangsleitung 15 zugeführt, aus der das Espresso-Mischwassergemisch in eine erste Strömungskanalanordnung 17 des ersten Wärmetauschers 16 und über die Kaltgetränkeauslaufleitung 18 in ein Kaltgetränkeauffanggefäß 49 fließt. Während des Durchlaufs des Espresso-Mischwassergemischs durch den ersten Wärmetauscher 16 wird das Gemisch auf die gewünschte Temperatur gekühlt.

Hierzu bildet wie oben erwähnt, eine zweite Strömungskanalanordnung 27 des ersten Wärmetauschers 16 den Verdampfer eines Kühlkreislaufs. Die Kühlung des Kondensators 25 des Kälteaggregats 23 erfolgt entweder mittels Konvektionskühlung, wie in Figur 1 dargestellt, oder der Kondensator 33 ist, wie in Figur 2 dargestellt, Teil eines zweiten Wärmetauschers 29, der zwischen der Wasserleitung 2 und der Durchlauferhitzerspeiseleitung 31 zu dem Wassererhitzer 4 angeordnet ist. Im letzteren Fall kühlt das Wasser den Kondensator 33 des zweiten Wärmetauschers 29, und die Abwärme wird als Vorheizung für das Brühwasser genutzt.

Um eine Wartezeit bis zum Erreichen der Arbeitstemperatur des Kälteaggregats 23 bzw. 23' zu vermeiden, kann es zweckmäßig sein, das Kälteaggregat 23 bzw. 23' in einem Stand-by-Modus mit herabgesetzter Leistung zu betreiben.

Bei Verwendung einer Peltierelementeanordnung 39 zur Kühlung des ersten Wärmetauschers, wie in Figur 3 dargestellt, erfolgt die Zubereitung des Espresso und die Zuführung des kalten Mischwassers wie bei der Verwendung eines Kompressions- oder Absorptionskälteaggregats. In dieser dritten Ausführungsform ist der erste Wärmetauscher 37 nur mit einer Strömungspfadanordnung 38 ausgestattet, in die in der Stellung "Eiskaffee" der mit der Steuerungseinheit 47' gesteuerten Ventilanordnung 9 der Espresso und das Mischwasser durch die Wärmetauschereingangsleitung 15' einströmen. Die Kühlung dieses Flüssigkeitsgemischs erfolgt dabei während des Durchlaufs mittels der an den ersten Wärmetauscher 37 gut wärmeleitend angeflanschten Peltierkaltseite 40 der Peltierelementeanordnung 39. Das durch Kühlung entstandene Kaltgetränk fließt aus der Kaltgetränkeauslaufleitung 18 in das Kaltgetränkauffanggefäß 49.

Die Abwärme der Peltierelementeanordnung 39 wird abgeleitet, indem das aus dem Wasserbehälter 1 mittels der Wasserpumpe 3 geförderte Wasser die Strömungskanalanordnung 43 des an die Peltierwarmseite 41 der Peltierelementeanordnung 39 angeflanschten zweiten Wärmetauschers 42 durchfließt, dabei die Abwärme der Peltierelementeanordnung 39 aufnimmt und über die Durchlauferhitzerspeiseleitung 45 in den Durchlauferhitzer 4 eintritt. Zusätzlich oder alternativ kann Abwärme durch Zwangskonvektion mittels eines Kühlkörpers 44 mit Lüfter abgeführt werden.

Auch bei dieser Ausführungsform schaltet die Steuerungseinheit 47' zur Getränkeerzeugung zunächst den Durchlauferhitzer 4 und/oder die Peltierelementeanordnung 39 ein, und wenn diese ihre Arbeitstemperatur erreicht haben, die Wasserpumpe 3 und gegebenenfalls die Mischwasserpumpe 22 ein.

Außer der Zubereitung von Espresso und Eiskaffee bietet die Getränkezubereitungsvorrichtung in allen Ausführungsformen die Möglichkeit, nur Kaltwasser als Kaltgetränk zu bereiten. In diesem Fall aktiviert die Steuerungseinheit 47 bzw. 47' lediglich die Ventilanordnung 9, das Kälteaggregat 23 bzw. 23' oder die Peltierelementeanordnung 39 und die Mischwasserpumpe 22. Das daraufhin von der Mischwasserpumpe 22 über die Mischwasserleitung 21 in den zweiten Eingang 13 der Ventilanordnung 9 geförderte kalte Wasser fließt über die Ventilanordnung 9 aus deren Ausgang 14 über die Wärmetauschereingangsleitung 15 bzw. 15' in die erste Strömungskanalanordnung 17 des ersten Wärmetauschers 16 bzw. die Strömungskanalanordnung 38 des ersten Wärmetauschers 37, wird während des Durchlaufs gekühlt und fließt über die Kaltgetränkeauslaufleitung 18 in das Kaltgetränkauffanggefäß 49. Da bei Kaltwasserzubereitung ein zweiter Wärmetauscher 29 bzw. 42 zur Ableitung der Abwärme des Kälteaggregats 23' bzw. der Peltierelementeanordnung 39 nicht wirksam ist, weil kein Wasser zur Brühwasserbereitung durchgeleitet wird, erfolgt die Ableitung der Abwärme des Kälteaggregats mittels des Kondensators 25 in Figur 1, oder der Peltierwarmseite 41 der Peltierelementeanordnung 39 mittels des Kühlkörpers 44.

In der vierten Ausführungsform der Getränkezubereitungsvorrichtung nach Figur 4 ist anders als bei den drei ersten Ausführungsformen keine von der Kaltgetränkeauslaufleitung 18 vollständig getrennte Heißgetränkeauslaufleitung 19 vorgesehen, wie in den Figuren 1, 2, 3 dargestellt, sondern die Heißgetränkeauslaufleitung 19' ist, wie in Figur 4 dargestellt, mit der (Kalt-)Getränkeauslaufleitung 18' des ersten Wärmetauschers 16 zu einem gemeinsamen Getränkeauslauf verbunden. In gleicher Weise kann mit der Heißgetränkeauslaufleitung 19 der dritten Ausführungsform durch Anschluss an die Kaltgetränkeauslaufleitung 18 verfahren werden. Somit wird in der vierten Ausführungsform nach Figur 4 das Heißgetränk an der gleichen Stelle wie das Kaltgetränk von der gemeinsamen (Kalt-)Getränkeauslaufleitung 18' abgegeben.

Figur 5 zeigt ausschnittsweise zwei Möglichkeiten, ohne Ventilanordnung wahlweise ein Heißgetränk, insbesondere Espresso, oder ein Kaltgetränk herzustellen bzw. kaltes Wasser bereitzustellen. Auch hier ist als gemeinsamer Getränkeauslauf nur die (Kalt-)Getränkeauslaufleitung 18' für alle bereitbaren Getränkearten am Ausgang des ersten Wärmetauschers 16 vorgesehen, statt dessen auch der erste Wärmetauscher 37 der Peltierelementeanordnung 39 fungieren kann.

Bei der fünften Ausführungsform sind die Heißgetränkeleitung 7, speziell eine Espressoleitung und die Mischwasserleitung 21 ständig mit der Eingangsleitung 15 bzw. 15' des ersten Wärmetauschers 16 bzw. 37 verbunden. Die Getränkeartsteuerung erfolgt in diesem Fall für die Zubereitung eines Espresso nur durch Aktivieren der mit dem nicht dargestellten Wassererhitzer verbundenen Brüheinheit 6, oder aber für die Zubereitung eines Eiskaffees sowohl durch Aktivieren der Brüheinheit 6 als auch des ersten Wärmetauschers 16 bzw. 37 und gegebenenfalls zum Zumischen von kaltem Mischwasser der Mischwasserleitung 21, insbesondere durch die nicht in Figur 5 gezeigte Mischwasserpumpe, oder aber für die Zubereitung von nur Kaltwasser durch Aktivieren der Mischwasserpumpe 21 und des ersten Wärmetauschers 16 bzw. 37.

Als Alternative kann die Mischwasserleitung 21' mit der dritten Strömungskanalanordnung17' des Wärmetauschers 16 bzw. mit der weiteren Strömungskanalanordnung des Wärmetauschers 37 verbunden werden. Dies hat den Vorteil, dass bei der Zubereitung von Kaltwasser das Mischwasser in der separaten Strömungskanalanordnung 17' gekühlt wird und nicht durch die mit Espressosud verunreinigte Strömungskanalanordnung 17 bzw. 38 fließt.

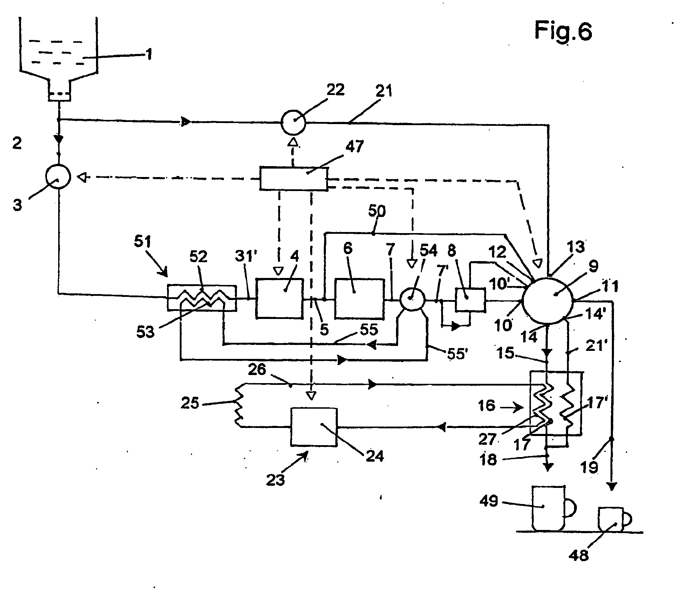

Ansonsten erfolgt auch bei den Varianten nach Figur 5 die Kühlung des ersten Wärmetauschers 16 bzw. 37 und die Wärmeabfuhr des Kälteaggregates bzw. der Peltierelementeanordnung wie bei den Ausführungsformen nach den Figuren 1 bis 3 bzw. gegebenenfalls Figuren 5 oder 6.

Auch bei den Varianten ohne Ventilanordnung ist zweckmäßig ein Partikelfilter 46 wie aus Figur 5 ersichtlich anzuordnen, um ein Verstopfen der ersten Strömungskanalanordnung des ersten Wärmetauschers 16 bzw. der Strömungskanalanordnung des ersten Wärmetauschers 37 der Peltierelementeanordnung 39 zu vermeiden.

In beiden Varianten der fünften Ausführungsform der Getränkezubereitungsvorrichtung nach Figur 5 fließt auch das wahlweise als solches von der (Kalt-)Getränkeauslaufleitung 18' abzugebende Heißgetränk, insbesondere Espressosud, durch den ersten Wärmetauscher 16, der aber in diesem Fall nicht aktiviert ist. Die Auswahl der verschiedenen Getränkearten erfolgt dabei mittels einer Steuerungseinheit, welche die oben erwähnten Komponenten der Getränkezubereitungsanordnung aktiviert, wozu die Steuerungseinheit ähnlich ausgebildet sein kann wie zu der Steuerungseinheit 47, 47' beschreiben, aber nicht geeignet zu sein braucht, eine Ventilanordnung gesteuert einzustellen.

Die sechste Ausführungsform der Getränkezubereitungsvorrichtung gemäß Figur 6 unterscheidet sich von der ersten Ausführungsform nach der weiter oben beschriebenen Figur 1 durch einen weiteren Wärmetauscher 51, zusätzlich zu dem durch das Kälteaggregat 23 gekühlten ersten Wärmetauscher 16. Dieser weitere Wärmetauscher 51 mit seiner ersten Strömungskanalanordnung 52 in die Durchlauferhitzerspeiseleitung 31 eingefügt und mit seiner zweiten Strömungskanalanordnung 53 über ein von der Steuereinheit 56 gesteuertes Ventil 54, ein Zweiwegeventil, in die Heißgetränkeleitung 7, 7' am Ausgang der Brüheinheit 6. In der Praxis ist auch das Ventil 54 zweckmäßig Bestandteil der erweiterten Ventilanordnung 9.

In dieser Getränkezubereitungsvorrichtung wird, wenn in deren Heißgetränkezubereitungsvorrichtung, hier der Kaffee-/Espressozubereitungsvorrichtung, bereitetes Heißgetränk bzw. heißer Kaffee oder Espresso zu einem abzugebenden Kaltgetränk abgekühlt werden soll, der heiße Kaffee/Espresso zunächst über das Ventil 54 durch den weiteren Wärmetauscher 51 geleitet, in dem ein erheblicher Teil des Wärmeinhalts an das kalte Wasser in der Wasserleitung 2 abgegeben wird, das somit vorgeheizt über die Durchlauferhitzerspeiseleitung 31' in den Durchlauferhitzer 4 eingespeist wird. In dem ersten Wärmetauscher 16 erfolgt dann nur noch die weitere Abkühlung des Getränks auf die gewünschte Temperatur des Kaltgetränks bzw. Eiskaffees, der von der Kaltgetränkeauslaufleitung 18 abgegeben wird.

Hingegen wird zu einer gewünschten Heißgetränkeabgabe entsprechend gesteuerter Schaltung des Ventils 54 der Wärmetauscher 51 nicht aktiviert und die Heißgetränkeleitung 7 wird über das Ventil 54 und die Ventilanordnung 9 direkt zu der Heißgetränkeauslaufleitung 19 durchgeschaltet.

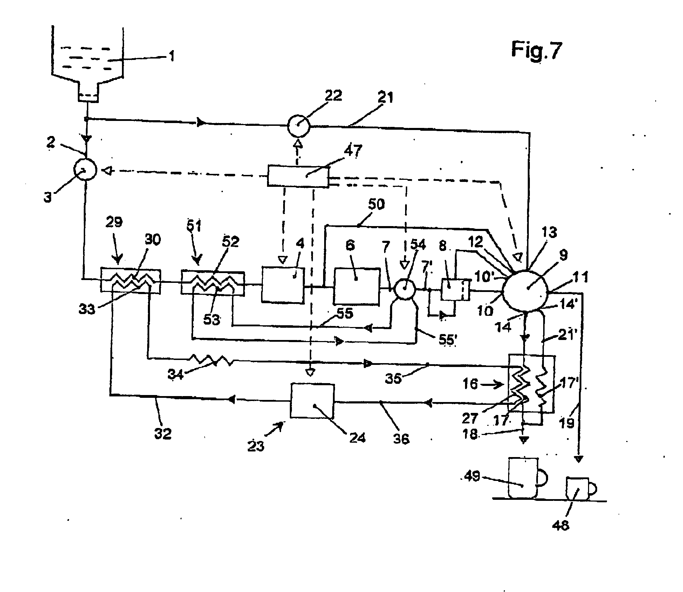

Die siebte Ausführungsform der Getränkezubereitungsvorrichtung gemäß Figur 7 unterscheidet sich von der zweiten Ausführungsform gemäß Figur 2, die weiter oben beschrieben ist, wiederum durch den weiteren Wärmetauscher 51, der hier den dritten Wärmetauscher 51 in Ergänzung des ersten Wärmetauschers 16 und des zweiten Wärmetauschers 29 darstellt. Die erste Strömungskanalanordnung 52 des dritten Wärmetauschers 51 folgt hier strömungsmäßig der ersten Strömungskanalanordnung 30 des zweiten Wärmetauschers 29 und führt wiederum über die Durchlauferhitzerspeiseleitung 31' zu dem Durchlauferhitzer 4. Das Ventil 54 in der Heißgetränkeleitung 7, 7' am Ausgang der Brüheinheit 6 wird wie in der sechsten Ausführungsform durch die Steuerungseinheit 56' gesteuert.

Somit wird, wenn ein von der Kaltgetränkeauslaufleitung 18 abzugebendes Kaltgetränk gewünscht wird, der dritte Wärmetauscher 51 über das gesteuerte Ventil 54 in die Heißgetränkeleitung 7, 7' eingeschleift und kann das bereits mit dem zweiten Wärmetauscher 29 vorerwärmte Wasser weiter auf eine höhere Temperatur erwärmen, bevor es über die Durchlauferhitzerspeiseleitung 31' in den Durchlauferhitzer 4 eingespeist wird.

Für gewünschte Heißgetränkeabgabe wird die Heißgetränkeleitung 7, 7' gegebenenfalls über den Partikelfilter 8 und die Ventilanordnung 9 direkt zu der Heißgetränkeauslaufleitung 19 bei deaktivierten Wärmetauschern 16, 29, 51 durchgeschaltet, so dass dieses durch keinen der Wärmetauscher 16, 29, 51 abgekühlt wird.

### Bezugszeichenliste

| | |
|---|---|
| 1 | Wasserbehälter (Wasserquelle) |
| 2 | Wasserleitung |
| 3 | Wasserpumpe |
| 4 | Durchlauferhitzer (Wassererhitzer) |
| 5 | Heißwasserleitung |
| 6 | Brüheinheit |
| 7, 7' | Heißgetränkeleitung |
| 8 | Partikelfilter |
| 8' | Heißgetränkeleitung |
| 9 | Ventilanordnung (Mehrwegeventil) |
| 10 | Eingang für Heißgetränk |
| 10' | Eingang für Heißgetränk (aus Partikelfilter) |
| 1 1 | Ausgang für Heißgetränk |
| 12 | Eingang für Heißwasser |
| 13 | Eingang für Kalt-/Mischwasser |
| 14 | Ausgang für zu kühlendes Getränk |
| 14' | Ausgang für Mischwasser |
| 15, 15' | Wärmetauschereingangsleitung |
| 16 | erster Wärmetauscher |
| 17 | erste Strömungskanalanordnung |
| 17' | dritte Strömungskanalanordnung |
| 18 | Kaltgetränkeauslaufleitung |
| 18' | (Kalt-)Getränkeauslaufleitung |
| 19, 19' | Heißgetränkeauslaufleitung |
| 20 | Bypassleitung |
| 21, 21' | Kalt-/Mischwasserleitung |
| 22 | Kalt-/Mischwasserpumpe |
| 23, 23' | Kälteaggregat |
| 24 | Kompressor/Austreiber |
| 25 | Kondensator |
| 26 | Kältemittelkreislaufleitungsabschnitt |
| 27 | Verdampfer/zweite Strömungskanalanordnung des ersten Wärmetauschers |
| 28 | Kältemittelkreislaufleitungsabschnitt |
| 29 | zweiter Wärmetauscher |
| 30 | erste Strömungskanalanordnung des zweiten Wärmetauschers |
| 31, 31' | Durchlauferhitzerspeiseleitung |
| 32 | Kältemittelkreislaufleitungsabschnitt |
| 33 | Kondensator/zweite Strömungskanalanordnung des zweiten Wärmetauschers |
| 34 | (externer) Kondensator |
| 35 | Kältemittelkreislaufleitungsabschnitt |
| 36 | Kältemittelkreislaufleitungsabschnitt |
| 37 | erster Wärmetauscher |
| 38 | Srömungskanalanordnung |
| 39 | Peltieretementeanordnung |
| 40 | Peltierkaltseite |
| 41 | Peltierwarmseite |
| 42 | zweiter Wärmetauscher |
| 43 | Strömungskanalanordnung |
| 44 | Kühlkörper mit Lüfter |
| 45 | Durchlauferhitzerspeiseleitung |
| 46 | Partikelfilter |
| 47, 47' | Steuerungseinheit |
| 48 | Heißgetränkeauffanggefäß |
| 49 | Kaltgetränkeauffanggefäß |
| 50 | Heißwasserleitung |
| 51 | weiterer (dritter) Wärmetauscher |
| 52 | erste Strömungskanalanordnung des weiteren Wärmetauschers |
| 53 | zweite Strömungskanalanordnung des weiteren Wärmetauschers |
| 54 | (Zweiwege-)Ventil |
| 55 | abführende Leitung |
| 55' | rückführende Leitung |
| 56, 56' | Steuerungseinheit |

## Patentansprüche

1. Getränkezubereitungsvorrichtung zur Herstellung eines Getränks, mit der ein Kaltgetränk, insbesondere Eiskaffee, aus einem in einem Getränkezubereitungsgerät mittels einer Heißgetränkezubereitungsvorrichtung (2 - 6) hergestellten Heißgetränk, insbesondere Kaffee/Espresso, unmittelbar im Anschluss an die Heißgetränkezubereitung ohne Zwischenspeicherung des Heißgetränks in einem Gefäß und ohne direkte Zugabe von Kühlmitteln, insbesondere Eis, Eiswasser oder Kühlkörpern, mittels einer Kühlvorrichtung (16, 23; 23'; 37, 39) kontinuierlich gegebenenfalls in dem selben Getränkezubereitungsgerät herstellbar ist, umfassend die Heißgetränkezubereitungsvorrichtung (2 - 6) sowie die mit deren Ausgang strömungsmäßig verbundene Kühlvorrichtung (16, 23; 23': 37, 39), die mindestens einen ersten Wärmetauscher (16, 37) mit wenigstens einer ersten Strömungskanalanordnung (17; 38) für das zu kühlende Getränk aufweist,
**dadurch gekennzeichnet,**
**dass** eine Ventilanordnung (9) zwischen dem Ausgang (7) der Heißgetränkezubereitungsvorrichtung (2 - 6) und einem Heißgetränkeauslauf (19, 19') der Getränkezubereitungseinrichtung sowie einem Eingang (15, 15') der Kühlvorrichtung, insbesondere der ersten Strömungskanalanordnung (17, 38) des ersten Wärmetauschers (16, 37) angeordnet ist.

2. Getränkezubereitungsvorrichtung nach Anspruch 1,
**dadurch gekennzeichnet,**
**dass** die Ventilanordnung, vorzugsweise ein Mehrwegeventil, außerdem zwischen der Mischwasserleitung (21) und dem Eingang (15, 15') der Kühlvorrichtung bzw. der ersten Strömungskanalanordnung (17, 38) des ersten Wärmetauschers (16, 37) und/oder einem Kaltgetränkeauslauf (18, 18') der Getränkezubereitungseinrichtung angeordnet ist.

3. Getränkezubereitungsvorrichtung nach Anspruch 2,
**dadurch gekennzeichnet,**
**dass** die Ventilanordnung (9) durch eine Steuerungseinheit (47, 47', 56, 56') umschaltbar ist, derart, dass Eingänge der Ventilanordnung (9) für Heißwasser (12), Heißgetränk (10, 10') und Mischwasser (13) mit Ausgängen der Ventilanordnung für zu kühlendes Getränk bzw. Kaltgetränk (14), Mischwasser (14') und Heißgetränk (11) verbindbar sind.

4. Getränkezubereitungsvorrichtung nach einem der Ansprüche 1 - 3,
**dadurch gekennzeichnet,**
**dass** mit dem ersten Wärmetauscher (16) ein Kälteaggregat (23, 23') in wärmeleitender Verbindung steht, das als Kompressionskälteaggregat oder als Absorptionskälteaggregat ausgebildet ist.

5. Getränkezubereitungsvorrichtung nach einem der Ansprüche 1 - 3,
**dadurch gakennzeichnet,**
dass der mindestens eine erste Strömungskanalanordnung (38) aufweisende erste Wärmetauscher (37) mit einer Peltlerkaltseite (40) einer Peltierelementeanordnung (39) als Kälteaggregat in wärmeleitender Verbindung steht.

6. Getränkezubereitungsvorrichtung nach Anspruch 5,
**dadurch gekennzeichnet,**
**dass** eine Peltierwarmseite (41) der Peltierelementeanordnung in wärmeleitender Verbindung mit einer Strömungskanalanordnung (43) eines zweiten Wärmetauschers (42) steht, die in einer Durchlauferhitzerspeiseleitung (45) angeordnet ist.

7. Getränkezubereitungsvorrichtung nach einem der Ansprüche 1 - 6,
**dadurch gekennzeichnet,**
**dass** zur alternativen Herstellung eines Heißgetränks als Verbrauchserzeugnis die Kühlvorrichtung (16, 23; 23'; 37, 39) deaktivierbar oder strömungsmäßig umgehbar ist.

8. Getränkezubereitungsvorrichtung nach einem der vorangehenden Ansprüche,
**dadurch gekennzeichnet,**
**dass** dem gekühlten Heißgetränk nach der Kühlvorrichtung (16, 23; 23'; 37, 39) Mischwasser, insbesondere gekühltes Mischwasser, zugeführt werden kann.

9. Getränkezubereitungsvorrichtung nach einem der Ansprüche 1 - 7,
**dadurch gekennzeichnet,**
**dass** mit einem Eingang der Kühlvorrichtung (16, 23; 23'; 37, 39) außer der Heißgetränkeleitung (7, 7') eine Mischwasserleitung (21), die mit der Wasserquelle (1) in Verbindung steht, strömungsmäßig verbindbar sind.

10. Getränkezubereitungsvorrichtung nach einem der vorangehenden Ansprüche,
**dadurch gekennzeichnet,**
**dass** zur alternativen Herstellung eines Kaltgetränks, insbesondere Kaltwasser, als Verbrauchserzeugnis die Heißgetränkezubereitungsvorrichtung (2 - 6) strömungsmäßig umgehbar oder zumindest teilweise deaktivierbar ist.

11. Getränkezubereitungsvorrichtung nach Anspruch 10,
**dadurch gekennzeichnet,**
**dass** die Heißgetränkezubereitungsvorrichtung (2 - 6) mittels einer Mischwasserleitung (21), die mit der Wasserquelle (1) in Verbindung steht, strömungsmäßig umgehbar ist.

12. Getränkezubereitungsvorrichtung nach einem der Ansprüche 8 -11.
**dadurch gekennzeichnet,**
**dass** in der Mischwasserleitung (21) eine Mischwasserpumpe (22) angeordnet ist.

13. Getränkezubereitungsvorrichtung nach einem der vorangehenden Ansprüche,
**dadurch gekennzeichnet,**
**dass** die Heißgetränkezubereitungsvorrichtung (2 - 6) eine Kaffee-/Espressozubereitungsvorrichtung ist, die eine Brüheinheit (6), einen Wassererhitzer (4), insbesondere einen Durchlauferhitzer, und eine Wasserpumpe (3) für Kaffee-/Espressozubereitung umfasst, die an eine Wasserquelle (1) angeschlossen ist.

14. Getränkezubereitungsvorrichtung nach einem der vorangehenden Ansprüche,
**dadurch gekennzeichnet,**
**dass** der erste Wärmetauscher (16) eine zweite Strömungskanalanordnung (27) aufweist, die mit der ersten Strömungskanalanordnung (17) in wärmeleitender Verbindung steht, und
**dass** die zweite Strömungskanalanordnung (27) in einem Kältemittelkreislauf (26, 28 bzw. 32, 35, 36) des Kälteaggregats (23, 23') angeordnet ist.

15. Getränkezubereitungsvorrichtung nach einem der vorangehenden Ansprüche,
**dadurch gekennzeichnet,**
**dass** der erste Wärmetauscher (16) eine dritte Strömungskanalanordnung (17') aufweist, die mit der ersten Strömungskanalanordnung (17) in wärmeleitender Verbindung steht.

16. Getränkezubereltungsvorrichtung nach Anspruch 14 oder 15,
**dadurch gekennzeichnet,**
**dass** ein Verdampfer (27) des Kälteaggregats (23, 23') direkt durch die zweite Strömungskanalanordnung des ersten Wärmetauschers (16) gebildet ist.

17. Getränkezubereitungsvorrichtung nach einem der vorangehenden Ansprüche,
**dadurch gekennzeichnet,**
**dass** das Kälteaggregat (23, 23') einen Kondensator (25, 34) der konvektionsgekühlten Bauart aufweist.

18. Getränkezubereitungsvorrichtung nach einem der vorangehenden Ansprüche,
**dadurch gekennzeichnet,**
**dass** ein Kondensator (33) in einem zweiten Wärmetauscher (29) integriert ist und dass der zweite Wärmetauscher (29) außer einer Strömungskanalanordnung des Kondensators (33) eine weitere Strömungskanalanordnung (30) umfasst, die in einer Durchlauferhitzerspeiseleitung (31) zu dem Durchlauferhitzer (4) der Kaffee-/Espressozubereitungsvorrichtung angeordnet ist.

19. Getränkezubereitungsvorrichtung nach einem der vorangehenden Ansprüche,
**dadurch gekennzeichnet,**
**dass** ein weiterer Wärmetauscher (51) mit einer ersten Strömungskanalanordnung (52) in der Durchlauferhitzerspeiseleitung (31') zu dem Durchlauferhitzer (4) der Kaffee-/Espressozubereitungs-vorrichtung (1 - 6) angeordnet ist und dass eine zweite Strömungskanalanordnung (53) des weiteren Wärmetauschers (51) in der Heißgetränkeleitung (7, 7') angeordnet ist.

20. Getränkezubereitungsvorrichtung nach einem der vorangehenden Ansprüche.
**dadurch gekennzeichnet,**
**dass** die Strömungskanalanordnungen (17,17', 27, 30, 33, 38, 43, 52, 53) der Wärmetauscher (16, 29, 37, 42, 52, 53) in Mikrostrukturtechnik ausgeführt sind.

21. Getränkezubereitungsvorrichtung nach einem der Ansprüche 3 - 20,
**dadurch gekennzeichnet,**
**dass** das Kälteaggregat (23, 23') durch die Steuerungseinheit (47, 47', 56, 56') in einen Stand-by-Modus schaltbar ist, in dem das Kältemittel des Kälteaggregats (23, 23') in der Kältemittelkreislaufleitung (26, 28; 35, 36) des Getränkezubereitungsgeräts vorgekühlt wird.

22. Getränkezuhereitungsvorrichtung nach einem der vorangehenden Ansprüche,
**dadurch gekennzeichnet,**
**dass** in dem Getränkezubereitungsgerät die Heißgetränkezubereitungsvorrichtung (2 - 6) angeordnet ist und ausgangsseitig über eine Heißgetränkeleitung (7) mit der in einem Beisteilgerät angeordneten Kühlvorrichtung (16, 23: 23'; 37, 39) verbunden ist.

## Claims

1. Drinks-preparing device for the preparation of a drink by which a cold drink, particularly an ice coffee, may continually be prepared from a hot drink, particularly coffee/espresso, prepared by a hot-drinks preparing device (2 - 6) in a drinks-preparing machine, immediately following the hot-drinks preparation without intermediate storage of the hot drink in a vessel and without any direct addition of coolants, especially ice, ice water or cooling bodies, by means of a cooling device (16, 23; 23'; 37, 39), if necessary in the same drinks-preparing machine,
comprising the hot-drinks preparing device (2 - 6) and the cooling device (16, 23; 23'; 37, 38) flow-conductively connected with the outflow thereof, including at least one first heat exchanger (16, 37) having at least one first flow channel arrangement (17; 38) for the drink to be cooled,
**characterized in**
**that** a valve arrangement (9) is arranged between the outflow (7) of the hot-drinks preparing device (2 - 6) and a hot-drinks outflow (19, 19') of the drinks-preparing device and an inflow (15, 15') of the cooling device, particularly of the first flow channel arrangement (17, 38) of the first heat exchanger (16, 37).

2. Drinks-preparing device according to claim 1,
**characterized in**
**that** a valve arrangement, preferably a multi-path valve, is additionally disposed either between the mixing-water duct (21) and the inflow (15, 15') of the cooling device, or the first flow channel arrangement (17, 38) of the first heat exchanger (16, 37), and/or a cold-drink outflow (18,18') of the drinks-preparing device.

3. Drinks-preparing device according to claim 2,
**characterized in**
**that** the valve arrangement (9) is suited to be switched by a control unit (47, 47', 56. 56') to connect inflows of the valve arrangement (9) for hot water (12), hot drink (10, 10') and mixing water (13) with outflows of the valve arrangement for the drink to be cooled, or the cold drink (14), mixing water (14') and hot drink (11).

4. Drinks-preparing device according to one of claims 1 - 3,
**characterized in**
**that** the first heat exchanger (16) is heat-conductively connected with a cooling system (23, 23') which is designed as either a compression refrigeration system or as absorption refrigeration system.

5. Drinks-preparing device according to one of claims 1 through 3,
**characterized in**
**that** the first heat exchanger (37) having at least one first flow channel arrangement (38) is heat-conductively connected with a Peltier cold side (40) of a Peltier element arrangement (39) as the cooling system.

6. Drinks-preparing device according to claim 5,
**characterized in**
**that** a Peltier hot side (41) of the Peltier element arrangement is in heat-conductively connected with a flow channel arrangement (43) of a second heat exchanger (42), which is arranged in a continuous-flow water heater supply duct (45).

7. Drinks-preparing device according to one of claims 1 through 8,
**characterized in**
**that** for the alternative preparation of a hot drink as a consumer product, the cooling device (16, 23; 23', 37, 39) is suited to be either deactivated or by-passed in terms of flow.

8. Drinks-preparing device according to one of the foregoing claims,
**characterized in**
**that** following the cooling device (16, 23; 23'; 37, 39), mixing water, particularly cooled mixing water, may be added to the cooled hot drink.

9. Drinks-preparing device according to one of claims 1 through 7,
**characterized in**
**that** in addition to the hot-drinks duct (7, 7'), a mixing-water duct (21) connected with the water source (1) is suited to be connected to an inflow of the cooling device (16, 23; 23'; 37, 39).

10. Drinks-preparing device according to one of the foregoing claims,
**characterized in**
**that** for the alternative production of a cold drink, particularly cold water, as a consumer product, the hot-drinks preparing device (2 - 6) may be by-passed in terms of flow or, at least partly, be deactivated.

11. Drinks-preparing device according to claim 10,
**characterized in**
**that** the hot-drinks preparing device (2 - 6) is suited to be by-passed in terms of flow by means of a mixing-water duct (21) connected with a water source (1).

12. Drinks-preparing device according to one of claims 8 through 11,
**characterized in**
**that** a mixing-water pump (22) is provided in the mixing-water duct (21).

13. Drinks-preparing device according to one of the foregoing claims,
**characterized in**
**that** the hot-drinks preparing device (2 - 6) is a coffee/espresso preparing device which comprises a brewing unit (6), a water heater (4), particularly a continuous-flow water heater, and a water pump (3) for coffee/espresso preparation which is connected to a water source (1).

14. Drinks-preparing device according to one of the foregoing claims,
**characterized in**
**that** the first heat exchanger (16) includes a second flow-channel arrangement (27) which is heat-conductively connected to the first flow-channel arrangement (17), and
**that** the second flow-channel arrangement (27) is provided in a coolant cycle (26, 28 or 32, 35, 36) of the cooling system (23, 23').

15. Drinks-preparing device according to one of the foregoing claims,
**characterized in**
**that** the first heat exchanger (16) includes a third flow-channel arrangement (17') which is heat-conductively connected to the first flow-channel arrangement (17).

16. Drinks-preparing device according to claim 14 or 15,
**characterized in**
**that** an evaporator (27) of the cooling system (23, 23') is constituted directly by the second flow-channel arrangement of the first heat exchanger (16).

17. Drinks-preparing device according to one of the foregoing claims,
**characterized in**
**that** the cooling system (23, 23') includes a condenser (25, 34) of the convection-cooled design.

18. Drinks-preparing device according to one of the foregoing claims,
**characterized in**
**that** a condenser (33) is integrated in a second heat exchanger (29) and that the second heat exchanger (29) comprises in addition to a flow-channel arrangement of the condenser (33) a second flow-channel arrangement (30) which is arranged in a continuous-flow supply duct (31) to the continuous-flow heater (4) of the coffee/espresso preparing device.

19. Drinks-preparing device according to one of the foregoing claims,
**characterized in**
**that** a further heat exchanger (51) having a first flow-channel arrangement (52) is arranged in the continuous-flow heater supply duct (31') to the continuous-flow heater (4) of the coffee/espresso preparing device (1 6) and that a second flow-channel arrangement (53) of the further heat exchanger (51) is arranged in the hot-drinks duct (7, 7').

20. Drinks-preparing device according to one of the foregoing claims,
**characterized in**
**that** the flow-channel arrangements (17, 17', 27, 30, 33, 38, 43, 52. 53) of the heat exchangers (16, 29, 37, 42, 52, 53) are made in microstructure technology.

21. Drinks-preparing device according to one of claims 3 through 20,
**characterized in**
**that** the cooling system (23, 23') is suited to be switched by the control unit (47, 47',56, 56') to a stand-by mode while the coolant of the cooling system (23, 23') is pre-cooled in the coolant cycle duct (26, 28, 35, 36) of the drinks-preparing machine.

22. Drinks-preparing device according to one of the foregoing claims,
**characterized in**
**that** the hot-drinks preparing device (2 - 6) is provided in the drinks-preparing machine and is connected, on the outflow-side, via a hot-drinks duct (7), with the cooling system (16, 23; 23'; 37, 39) provided in an add-on device.

## Revendications

1. Dispositif de préparation de boissons, servant à produire une boisson, avec lequel une boisson froide, en particulier du café glacé, peut être préparée à partir d'une boisson chaude, en particulier de café/expresso, produite dans un appareil de préparation de boissons au moyen d'un dispositif de préparation de boissons chaudes (2 - 6), directement à la suite de la préparation de boisson chaude et sans stockage intermédiaire de la boisson chaude dans un récipient ni addition directe de moyens de refroidissement, en particulier de glace, d'eau glacée ou de corps refroidissants, au moyen d'un dispositif de refroidissement (16, 23 ; 23' ; 35, 39), de façon continue, éventuellement dans le même appareil de préparation de boissons, qui comprend le dispositif de préparation de boissons chaudes (2 - 6) ainsi que le dispositif de refroidissement (16, 23 ; 23' ; 37, 39) relié sur le plan de l'écoulement à sa sortie et qui présente au moins un premier échangeur de chaleur (16, 37), comprenant lui-même au moins une première structure de canal d'écoulement (17 : 38) prévue pour la boisson à refroidir,
**caractérisé en ce qu'**une structure de vanne (9) est intercalée entre la sortie (7) du dispositif de préparation de boissons chaudes (2 - 6) et un bec de sortie de boisson chaude (19, 19') du dispositif de préparation de boissons, ainsi qu'une entrée (15, 15') du dispositif de refroidissement, en particulier de la première structure de canal d'écoulement (17, 38) du premier échangeur de chaleur (16, 37).

2. Dispositif de préparation de boissons selon la revendication 1,
**caractérisé en ce que** la structure de vanne, en particulier une vanne à plusieurs voies, est de plus disposée entre la conduite d'eau mixte (21) et l'entrée (15, 15') du dispositif de refroidissement, ou la première structure de canal d'écoulement (17, 38) du premier échangeur de chaleur (16, 37) et/ou une sortie de boisson froide (18, 18') du dispositif de préparation de boissons.

3. Dispositif de préparation de boissons selon la revendication 2, **caractérisé en ce que** la structure de vanne (9) peut être manoeuvrée par une unité de commande (47, 47', 56, 56') de telle manière que des entrées de la structure de vanne (9) prévues pour l'eau chaude (12), la boisson chaude (10, 10') et l'eau mixte (13) puissent être reliées à des sorties de la structure de vanne qui sont prévues pour la boisson à refroidir ou pour la boisson froide (14), pour l'eau mixte (14') et pour la boisson chaude (11).

4. Dispositif de préparation de boissons selon l'une des revendications 1 à 3,
**caractérisé en ce qu'**un agrégat frigorifique (23, 23'), qui est conçu en tant qu'agrégat frigorifique à compression ou en tant qu'agrégat frigorifique à absorption, est en liaison de conduction de la chaleur avec le premier échangeur de chaleur (16).

5. Dispositif de préparation de boissons selon l'une des revendications 1 à 3,
**caractérisé en ce que** le premier échangeur de chaleur (37), qui présente au moins une première structure de canal d'écoulement (38), est en liaison de conduction de la chaleur avec un côté froid de Peltier (40) d'un groupe d'éléments Peltier (39) utilisé comme agrégat frigorifique.

6. Dispositif de préparation de boissons selon la revendication 5,
**caractérisé en ce qu'**un côté chaud de Peltier (41) du groupe d'éléments Peltier est en liaison de conduction de la chaleur avec une structure de canal d'écoulement (43) d'un deuxième échangeur de chaleur (42) qui est disposé dans une conduite d'alimentation de chauffe-eau instantané.

7. Dispositif de préparation de boissons selon l'une des revendications 1 à 6,
**caractérisé en ce que**, pour la production alternative d'une boisson chaude en tant que produit de consommation, le dispositif de refroidissement (16, 22, 23' ; 37, 39) peut être désactivé ou peut être mis en dérivation sur le plan de l'écoulement.

8. Dispositif de préparation de boissons selon l'une des revendications précédentes,
**caractérisé en ce que** de l'eau mixte, en particulier de l'eau mixte refroidie, peut être amenée vers la boisson chaude refroidie en aval du dispositif de refroidissement (16, 23 ; 23' ; 37, 39).

9. Dispositif de préparation de boissons selon l'une des revendications 1 à 7,
**caractérisé en ce qu'**une conduite d'eau mixte (21) qui est en communication avec la source d'eau (1) peut être reliée sur le plan de l'écoulement à une entrée du dispositif de refroidissement (16, 23 ; 23' ; 37, 39) en dehors de la conduite de boissons chaudes (7, 7'),

10. Dispositif de préparation de boissons selon l'une des revendications précédentes,
**caractérisé en ce que**, pour la production alternative d'une boisson froide, en particulier d'eau froide, en tant que produit de consommation, le dispositif de préparation de boissons chaudes (2 - 6) peut être mis en dérivation sur le plan de l'écoulement ou être au moins partiellement désactivé.

11. Dispositif de préparation de boissons selon la revendication 10,
**caractérisé en ce que** le dispositif de préparation de boissons chaudes (2 - 6) peut être mis en dérivation sur le plan de l'écoulement au moyen d'une conduite d'eau mixte (21) qui est en communication avec la source d'eau (1).

12. Dispositif de préparation de boissons selon l'une des revendications 8 à 11,
**caractérisé en ce qu'**une pompe à eau mixte (22) est intercalée dans la conduite d'eau mixte (21).

13. Dispositif de préparation de boissons selon l'une des revendications précédentes,
**caractérisé en ce que** le dispositif de préparation de boissons chaudes (2 - 6) est un dispositif de préparation de café/expresso qui comprend une unité de percolation (6), un chauffe-eau (4), en particulier un chauffe-eau instantané, et une pompe à eau (3) pour la préparation du café/expresso, qui est raccordée à une source d'eau (1).

14. Dispositif de préparation de boissons selon l'une des revendications précédentes,
**caractérisé en ce que** le premier échangeur de chaleur (16) présente une deuxième structure de canal d'écoulement (27) qui est en liaison de transmission de la chaleur avec la première structure de canal d'écoulement (17), et **en ce que** la deuxième structure de canal d'écoulement (27) est intercalée dans un circuit de milieu de refroidissement (26, 28 ou 32, 35, 36) de l'agrégat frigorifique (23, 23').

15. Dispositif de préparation de boissons selon l'une des revendications précédentes,
**caractérisé en ce que** le premier échangeur de chaleur (16) présente une troisième structure de canal d'écoulement (17') qui est en liaison de transmission de la chaleur avec la première structure de canal d'écoulement (17).

16. Dispositif de préparation de boissons selon la revendication 14 ou 15,
**caractérisé en ce qu'**un évaporateur (27) de l'agrégat frigorifique (23, 23') est formé directement par la deuxième structure de canal d'écoulement du premier échangeur de chaleur (16).

17. Dispositif de préparation de boissons selon l'une des revendications précédentes,
**caractérisé en ce que** l'agrégat frigorifique (23, 23') présente un condenseur (25, 34) du type refroidi par convection.

18. Dispositif de préparation de boissons selon l'une des revendications précédentes,
**caractérisé en ce qu'**un condenseur (33) est intégré dans un deuxième échangeur de chaleur (29) et **en ce que** le deuxième échangeur de chaleur (29) comprend, en dehors d'une structure de canal d'écoulement du condenseur (33), une autre structure de canal d'écoulement (30) qui est disposée dans une conduite d'alimentation du chauffe-eau instantané (31) aboutissant au chauffe-eau instantané (4) du dispositif de préparation de café/expresso.

19. Dispositif de préparation de boissons selon l'une des revendications précédentes,
**caractérisé en ce qu'**un autre échangeur de chaleur (51) comprenant une première structure de canal d'écoulement (52) est disposée dans la conduite d'alimentation du chauffe-eau instantané (31') aboutissant au chauffe-eau instantané (4) du dispositif de préparation de café/expresso (1 - 6), et **en ce qu'**une deuxième structure de canal d'écoulement (53) de l'autre échangeur de chaleur (51) est disposée dans la conduite de boisson chaude (7, 7').

20. Dispositif de préparation de boissons selon l'une des revendications précédentes,
**caractérisé en ce que** les structures de canal d'écoulement (17, 17', 27, 30, 33, 38, 43, 52, 53) des échangeurs de chaleur (16, 29, 37, 42, 52, 53) sont réalisées selon la technique des microstructures.

21. Dispositif de préparation de boissons selon l'une des revendications 3 à 20,
**caractérisé en ce que** l'agrégat frigorifique (23, 23') peut être placé par l'unité de commande (47, 47', 56, 56') dans un mode d'attente dans lequel le milieu de refroidissement de l'agrégat frigorifique (23, 23') est prérefroidi dans la conduite de circuit de milieu de refroidissement (26, 28 ; 35, 36) du dispositif de préparation de boissons.

22. Dispositif de préparation de boissons selon l'une des revendications précédentes,
**caractérisé en ce que** le dispositif de préparation de boissons chaudes (2 - 6) est agencé dans l' appareil de préparation de boissons et est relié, côté sortie, par l'intermédiaire d'une conduite de boisson chaude (7), au dispositif de refroidissement (16, 23 ; 23' ; 37, 39) qui est disposé dans un appareil rapporté.
